# EUROPEAN PATENT APPLICATION

(11) **EP 1 610 528 A2**
(43) Date of publication of application: **28.12.2005**
(21) Application number: 05380109.8
(22) Date of filing: 30.05.2005
(51) Int. Cl.: H04L 29/06, H04L 9/32

(54) **System and method of asserting identities in a telecommunications network**

(30) Priority: 24.06.2004 ES 200401544
(71) Applicant: Vodafone Group PLC, Newbury Berkshire RG14 2FN (GB); Vodafone Espana, S.A., 28108 Alcobendas, Madrid (ES)
(72) Inventor: Del Ser Bartolomé, David, 28005 Madrid (ES); Rodriguez Ortega, Sergio, 28005 Madrid (ES)
(74) Representative: Carvajal y Urquijo, Isabel

(57) **Abstract**

The method and system of asserting identities in a telecommunications network is based on an identity assertion node (500) receiving authentication requests (1) for authenticating subscribers (100) from entities (200) offering services. Upon receiving an authentication request, the identity assertion node consults a database (503) to determine if the subscriber has already been authenticated (with a high enough security level A/B/C) in the same session, and
a) if the subscriber (100) has already been authenticated during said session, the identity assertion node sends an authentication response (5) to the entity (200) which requested the authentication of the subscriber, and
b) if the subscriber (100) has not been authenticated during said session, the identity assertion node directs an authentication request (1.1) to an authentication node (400) of the telecommunications network.

## Description

### FIELD OF THE INVENTION

The invention is encompassed within the field of telecommunications.

### BACKGROUND OF THE INVENTION

Originally in telecommunications, control of the identity of a subscriber was mainly related to the relationship between the subscriber and the telecommunications network operator, for example, to be able to assure that the expenses incurred due to the activity of the subscriber in the network (mainly telephone calls) could be correctly charged to the account of the subscriber, in a secure manner and such that the authenticity of the subscriber was clear, for the purpose of preventing fraudulent actions. That is to say, it was important for the operator of the network to be able to verify the authenticity of the subscriber. In mobile telephony networks, such as the GSM (Global System for Mobile Communication) and UMTS (Universal Mobile Telecommunications System, also called "Third Generation Mobile Telephony") networks, there are advanced mechanisms of authenticating the subscriber before the network. The GSM network authenticates the identity of the subscriber using a "challenge-response" mechanism which is triggered by the introduction of the PIN code by the subscriber. A random number of 128 bits (called RAND) is sent to the mobile station. The mobile station calculates the signed response of 32 bits (called SRES, Signed Response) based on the encryption of the random number (RAND) with the authentication algorithm (called A3) using the individual subscriber authentication key (Ki). When the GSM network receives the signed response (SRES) from the subscriber, said network repeats the calculation to verify the identity of the subscriber. If the received SRES coincides with the calculated value, the mobile station has been successfully authenticated and can continue the connection. If the values do not coincide, the connection is terminated and an authentication failure is indicated to the mobile station.

With the emergence of data services such as the access to the portal of a mobile telephony operator company, internet navigation or advanced messaging, such as the Multimedia Messaging System (MMS) or Instant Messaging (chat) in the new telecommunications networks, the necessity of correctly managing the identity of the subscribers in a more complex environment and in which different entities participate has arisen. That is to say, it is no longer just a question of authenticating the subscriber before the telecommunications network as such (i.e., for example authenticating the subscriber before his HPLMN - Home Public Land Mobile Network, the mobile telephony network to which a subscriber belongs - when the subscriber attempts to access the network), but also allowing the subscriber to be able to authenticate himself before different entities or nodes of the network, for example, before entities offering certain services which the subscriber wishes to access, through a telecommunications network.

The standard mode for carrying out a subscriber authentication before a service provider has been the submission of identification credentials by the subscriber and their subsequent verification by the service provider. Thus, the subscriber affirms to be *Subscriber U* and proves it by submitting credentials which only he could submit. These credentials may vary as the security level increases from something that only *Subscriber U* knows, such as a password, passing through something which only *Subscriber U* could have, such as a special card calculating random numbers or digital keys connected to the PC, to something which only *Subscriber U* could be, such as the holder of his finger prints or DNA.

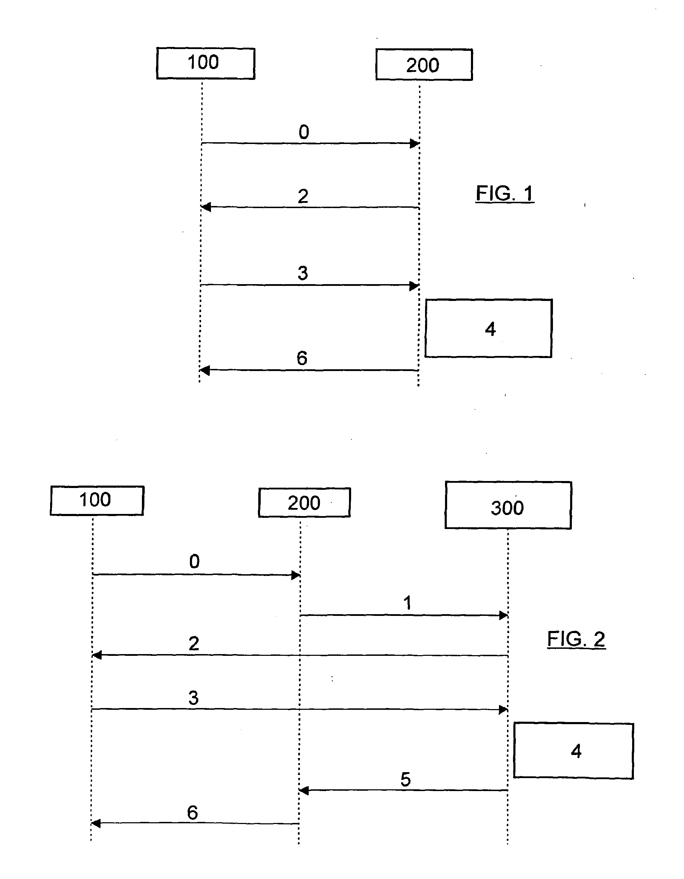

Figure 1 shows a process of this type according to the state of the art, wherein the subscriber 100 authenticates himself before the service 200 by means of a process comprising the following steps:

0: "Service request": the subscriber 100 sends a service request to the entity 200 offering the service (which can be a service represented by an Internet address or by a telephone number to which the request must be sent; in this context, the terms "service" and "entity" must be interpreted in a broad manner, for example, the "entity" does not have to be a corporate body or individual, but rather any "entity" which can offer a service and which can carry out the actions necessary in each case, for example, according to the circumstances, to verify the identity of the subscriber, to bill the service, etc.; for example, the same bank can comprise a plurality of "entities", each one of which offering a certain service to the clients of the bank).

2: "Credentials request": the entity 200 responds to the subscriber with a credentials request, for example, request for a file which can be used to authenticate the subscriber, i.e., so that the entity 200 can check that the subscriber is who he says he is. The desired authentication method, and therefore the security level of the credentials, depends on the required service and, accordingly, is determined by the service provider or entity. There are many ways to define a security level; for example, a security level can be defined in reference to an authentication method or to a group of authentication methods, considered to be "sufficiently secure" by the service provider (see, for example, WO-A-03/100544 which, among others, discloses the selection of one or more security profiles by a service provider).

3: "Submission of credentials": the subscriber responds to the request, sending his credentials. This step can include the manual introduction, by the subscriber, of a secret key (PIN).

4: "Authentication": in this case, the entity 200 itself checks that the subscriber 100 is who he says he is by using the received credentials.

6: "Response to the subscriber": the entity 200 communicates to the subscriber 100 the result of the authentication and, if the result is positive, continues with the provision of the service.

It may occur that during one or several sessions in the network, a subscriber has to interact with several entities, for example with an airline company to reserve a flight, with a car rental company to request an automobile at the destination airport and finally with a hotel to stay at during the stay. However, if the subscriber had to carry out a complete authentication process every time he begins to interact with a new entity, for example introducing identity information, key words (for example, his PIN) every time he goes, for example, from the airline company to the rental company or to the hotel, carrying out complex actions involving a data exchange with several entities through the telecommunications network can be incredibly tedious for the subscriber.

As a result, a figure commonly known as the "Identity Provider" (for example, implemented with a specific technology, such as Liberty Alliance®, for example) has emerged and usually constitutes a node of the telecommunications network. The main task of the Identity Provider consists of allowing the subscriber to fluidly move between different services without having to introduce his identity information every time he comes into contact with a new entity.

When the subscriber starts the session and attempts to access a service for the first time, the subscriber is first authenticated in the Identity Provider; subsequently the subscriber can access the original service. Figure 2 schematically shows this process (the steps similar to those of Figure 1 maintain the same reference numbers):

0: "Service request": the subscriber 100 sends a service request to the entity 200.

1: "Authentication request": the entity 200 sends an authentication request to an Identity Provider 300, specifying the security level required for the provision of its service.

2: "Credentials request": in this case, the Identity Provider 300 (and not the entity 200 offering the service) responds by sending a credentials request to the subscriber 100.

3: "Submission of credentials": the subscriber responds to the request, sending his credentials to the Identity Provider 300 (i.e., in this case, the entity 200 does not have to intervene in steps 2 and 3).

4: "Authentication": in this case, the Identity Provider 300 checks, using the received credentials, that the subscriber 100 is who he says he is. It also checks that the received credentials comply with the security level required by the entity 200.

5: "Authentication response": the Identity Provider 300 communicates the result of the authentication to the entity 200, for example, confirming that the subscriber 100 is who he says he is.

6: "Response to the subscriber": the entity 200 communicates the result of the authentication to the subscriber 100 and, if the result is positive, continues with the provision of the service.

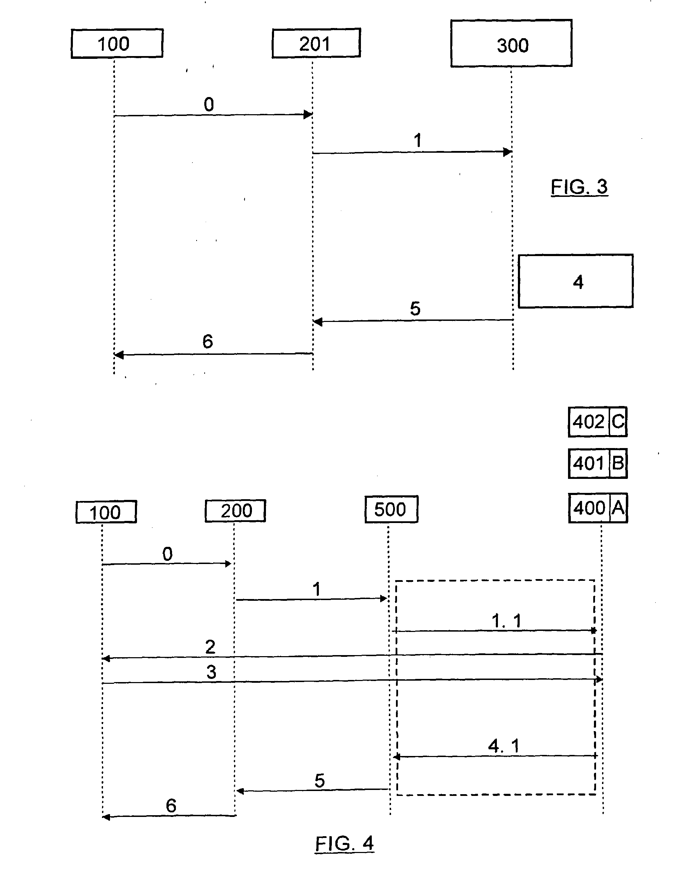

In subsequent accesses to other services, such as to the travel agency or car rental sites, steps 2 and 3 of the previous figure are no longer necessary, given that the Identity Provider keeps the session active for a given security level. The subscriber can thus access other services without having to introduce his credentials again, as shown in Figure 3, wherein the subscriber 100, after having been authenticated before the entity (service) 200 according to the process of Figure 2, sends a service request (0) to the entity (service) 201, which in turn directs the authentication request (1) to the Identity Provider 300. In this case, the Identity Provider does not have to request credentials from the subscriber, but rather, provided that the security level required by the new service is equal to or lower than those previously satisfied (if they were higher, it would have to authenticate the subscriber again, requesting from the subscriber the credentials of the required level), reuses the subscriber session which is active and responds with an authentication response (5) without needing to question the subscriber. Therefore the service provider 201 can respond (6) to the service request (0) of the subscriber directly, without the subscriber being involved in an authentication process.

The inconvenience for the subscriber of having to introduce the credentials in each service providing entity visited in the same session is thus avoided. Furthermore, he will not have to remember multiple credentials (i.e. subscriber name/password) since he only needs to authenticate himself before the Identity Provider, and the risk of losing the credentials if written down decreases. This is applied to mobile services in the same manner.

WO-A-03/100544 (which has already been mentioned above), WO-A-03/085925 and US-A-2003/0149781 disclose different systems including Identity Providers.

In the state of the art, the function of the Identity Provider, as it is implemented in Liberty Alliance®, for example, is a double function. On one hand, as described above, the Identity Provider is responsible for verifying the identity of the subscriber, using any of the authentication methods available and implemented in the Identity Provider. On the other hand, the Identity Provider makes this verification of the identity available to those other nodes or entities having permission to access it, specifying by means of an identity assertion the mode in which it was obtained by means of credentials and being responsible for it. Therefore, the different identities or nodes (for example, entities offering services which the subscriber wishes to access) can request the assertion of the identity of the subscriber from the Identity Provider rather than directly requesting this from the subscriber by means of a submission of credentials request, such that the authentication of the subscriber before new entities can be carried out without representing a burden for the subscriber and for his equipment (for example, a mobile telephony equipment constituted of a terminal and a SIM/USIM card).

In known identity management technologies, such as Liberty Alliance®, these two functions (namely: the initial authentication of the subscriber before the Identity Provider on one hand; and the subsequent transmission of assertions of the identity of the subscriber to other entities, through the Identity Provider) are merged into a single node and are impossible to separate. However, this poses drawbacks in a mobile environment since a mobile telephony operator contemplating the possibility of installing an Identity Provider already has available to it very different methods of authentication of the subscriber, each one being housed in different nodes of the network. For example, in a GSM network, the HLR (Home Location Register) is traditionally responsible for the GSM authentication, whereas GGSN (Gateway GPRS Support Node: the boundary between the packet radio world -GPRS- and the packet cable world -internet-) manages access to the GPRS (General Packet Radio Service: a packet-mode data service overlaid on the infrastructure of GSM networks) network. Other authentication methods can also exist, for example biometric authentication systems based on voice or finger prints, and which can be housed in different nodes of the telecommunications network. All these nodes could have certain features with regard to user-friendliness and security level offered, which makes them complementary in their functionality.

### DESCRIPTION OF THE INVENTION

Therefore, a mobile telephony network operator may be interested in separating the two abovementioned functions of the Identity Provider, such that on one hand it has an "Assertions Provider" or "Identity Assertion Node", and on the other, one or several Authentication Nodes (AN), which can consist of authentication nodes already existing in the mobile telephony network. Thus, for a suitable identity management complying with the purposes set forth above, the mobile telephony network operator can take advantage of Authentication Nodes already existing in its network (or new Authentication Nodes expressly introduced in the network for identity management), and just add the "Identity Assertion Node", a node which would delegate authentication of the subscriber to one of the Authentication Nodes and is subsequently responsible for transmitting the identity credentials to the nodes or entities requesting them and which have permission to obtain them.

Of course in this distributed situation, it is crucial for the "Identity Assertion Node" and the Authentication Node or Nodes to correctly communicate with one another.

A first aspect of the invention refers to a system of asserting identities in a telecommunications network, the telecommunications network including at least one authentication node for authenticating a subscriber before the network (for example, a standard authentication node, of the type already existing in many telecommunications networks), said at least one authentication node being configured to carry out an authentication process for authenticating the identity of the subscriber from electronic credentials furnished by the subscriber and to generate a positive or negative response according to a result of said authentication process.

The system of asserting identities comprises an identity assertion node comprising:
means of receiving authentication requests for authenticating subscribers from entities requesting authentication of subscribers; and
authentication check means for checking authentication as a response to an authentication request.

According to the invention, said authentication check means are configured for
- determining, by means of consulting a database, if the subscriber has already been authenticated on a previous occasion during the same communications session established by the subscriber, and
   a) if said authentication check means determine, by means of said consultation, that the subscriber has already been authenticated on a previous occasion during said session, sending an authentication response ("positive") to the entity which requested the authentication of the subscriber, and
   b) if said authentication check means determine, by means of said consultation, that the subscriber has not been authenticated on a previous occasion during said session, directing an authentication request to an authentication node of the telecommunications network;
the authentication check means being configured to receive a response to the authentication request from the authentication node, and to send an authentication response to the entity which requested the authentication of the subscriber, according to said response to the authentication request.

All the authentication infrastructure already existing in the network can thus be used, simply adding the identity assertion nodes, which can be designed in a manner that is substantially independent from the authentication nodes and which do not have to include authentication means exactly. This can substantially simplify the creation of the identity assertion nodes, while at the same time it enables easily using new authentication resources which are incorporated to the network, without needing to incorporate said resources in the identity assertion nodes themselves. For example, if new authentication nodes or resources with higher security levels than those which previously existed are incorporated to the network, the assertion nodes can direct themselves to them when they receive authentication requests requiring said security levels, without the identity assertion nodes themselves having to house the new authentication resources.

The database can include a listing of open sessions, an indication of a subscriber for each session, and an indication of an authentication status of said subscriber in said session. In each case, the assertion node can thus determine whether or not it is necessary to direct an authentication request to an authentication node.

The indication of an authentication status can include an indication of at least one security level corresponding to a security level with which an authentication process for authenticating the subscriber has been carried out during said session. Thus, if the assertion node receives an authentication request indicating a certain security level (or a required minimum security level), the assertion node can check if the eventual authentication process for authenticating the subscriber carried out during the session corresponds to said certain security level (or to a higher level). Thus, the assertion node only has to request a "new" authentication from an authentication node if the new authentication request requires an authentication with a higher security level than the security level (or higher than one of the security levels) appearing in the data base.

The telecommunications network can include a plurality of authentication nodes, each authentication node being configured to carry out authentication processes with at least one security level, at least one authentication node being configured to carry out authentication processes with a security level that is different from the security level of the authentication process of another authentication node, the authentication request including an indication of a desired security level, the identity assertion node being configured such that the check means direct an authentication request to an authentication node selected from among the plurality of available authentication nodes, according to the desired security level. This allows optimizing the use of resources in the network, since in each step, one authentication node or another can be resorted to, according to the security level needed (and the type of credentials the subscriber can furnish).

There can be several security levels, and the requests can include an indication of a desired security level; in these cases, the authentication check means, for checking authentication as a response to an authentication request, can be configured for
- determining, by means of consulting a database, if the subscriber has already been authenticated with said security level on a previous occasion during the same session, and
   a) if said check means determine, by means of said consultation, that the subscriber has already been authenticated with said security level (or with a "higher" security level accepted by the entity which requested authentication) on a previous occasion during the same session, sending an authentication response ("positive") to the entity which requested the authentication of the subscriber, and
   b) if said check means determine, by means of said consultation, that the subscriber has not been authenticated with said security level on a previous occasion during the same session, directing an authentication request to an authentication node of the telecommunications network with the capability to carry out an authentication with said security level.

The authentication request can include at least one identification of the subscriber and one identification of a security level.

The response to the authentication request can include at least one identification of the subscriber, one identification of a security level and one indication of a result of the authentication in the authentication node (authentication which may have taken place on this occasion or on a previous occasion in the same session).

The identification of the subscriber can comprise the MSISDN ("Mobile Station International ISDN Number) of the subscriber.

The authentication request can be sent from the identity assertion node to the authentication node in the HyperText Transfer Protocol (HTTP), a universally accepted protocol forming the basis of internet. Within the functions permitted by HTTP is redirection: when a subscriber makes an HTTP request to a server, the latter can either respond with a valid response (2XX response codes) or redirect the subscriber to another server where he will be attended to (3XX codes). This redirection in current browsers is completely transparent for the subscriber. In Liberty Alliance® technology, it is used so that the service wishing to know the identity of the subscriber sends it to the Identity Provider which, once the subscriber is authenticated, redirects it back to the service, carrying the identity credentials.

HTTP allows for including in one request a series of parameters directed to the server. These parameters can be included in two modes, GET and POST, which basically differ in the field of the protocol in which the parameters travel. In the case of GET, the parameters are carried, following the address (URL) of the resource which is requested. However in the case of POST, the parameters are carried in the body of the message.

The system of the invention can be based on the same mechanism for implementing the communication between the identity assertion node and the authentication node, as will be explained later in relation to the description of a preferred embodiment of the invention.

The authentication request can be sent from the identity assertion node to the authentication node by the telecommunications network.

The authentication response can comprise credentials accrediting the subscriber before the entity which requested the authentication of the subscriber.

The authentication node can be configured, as a response to an authentication request, to send a credentials request to the subscriber to receive a submission of credentials of the subscriber.

Another aspect of the invention refers to a method of asserting identities in a telecommunications network, of the type including at least one authentication node for authenticating a subscriber before the network, said at least one authentication node being configured to carry out an authentication process for authenticating the identity of the subscriber from electronic credentials furnished by the subscriber, and to generate a positive or negative response according to a result of said authentication process.

The method comprises the steps of:
receiving, in a network node which can be called "identity assertion node"- and which is different from (substantially independent from) the authentication node-, an authentication request for authenticating a subscriber from an entity requesting authentication of the subscriber;
determining, by means of consulting a database (which can be part of the identity assertion node), if the subscriber has already been authenticated on a previous occasion during the same communications session established by the subscriber, and
   a) if it is determined, by means of said consultation, that the subscriber has already been authenticated on a previous occasion during said session, sending an authentication response to the entity which requested the authentication of the subscriber, and
   b) if it is determined, by means of said consultation, that the subscriber has not been authenticated on a previous occasion during said session, directing an authentication request to an authentication node of the telecommunications network,
receiving a response to the authentication request from the authentication node, and
sending an authentication response to the entity which requested the authentication of the subscriber, according to said response to the authentication request.

A listing of open sessions, an indication of a subscriber for each session and an indication of an authentication status of said subscriber in said session can be established in the database.

An indication of at least one security level corresponding to a security level with which an authentication process for authenticating the subscriber has been carried out during said session, can be included in the indication of an authentication status.

In the cases in which the telecommunications network includes a plurality of authentication nodes, each authentication node being configured to carry out authentication processes with at least one security level, at least one authentication node being configured to carry out authentication processes with a security level that is different from the security level of the authentication process of another authentication node,
an indication of a desired security level can be included in the authentication request, and the identity assertion node can then direct the authentication request to an authentication node which the assertion node selects from among the plurality of authentication nodes, according to the desired security level.

There can be several security levels, such that an indication of a desired security level can be included in the authentication requests. Then, the following steps can be carried out in the identity assertion node:
- determining, by means of consulting a database, if the subscriber has already been authenticated with said desired security level on a previous occasion during the same session, and
   a) if it is determined, by means of said consultation, that the subscriber has already been authenticated with said security level on a previous occasion during the same session, sending an authentication response to the entity which requested the authentication of the subscriber, and
   b) if it is determined, by means of said consultation, that the subscriber has not been authenticated with said security level on a previous occasion during the same session, directing an authentication request to an authentication node of the telecommunications network with the capability to carry out an authentication with said security level.

At least one identification of the subscriber and one identification of a security level can be included in the authentication request.

At least one identification of the subscriber, one identification of a security level and one indication of a result of the authentication in the authentication node can be included in the response to the authentication request.

The MSISDN of the subscriber can be used for identifying the subscriber.

The authentication request can be sent from the identity assertion node to the authentication node in the HyperText Transfer Protocol (HTTP).

The authentication request can be sent from the identity assertion node to the authentication node through the telecommunications network.

Credentials accrediting the subscriber before the entity can be included in the authentication response.

A credentials request can be sent from the authentication node, as a response to an authentication request, to the subscriber to receive a submission of credentials of the subscriber.

### BRIEF DESCRIPTION OF THE DRAWINGS

A series of drawings helping to better understand the invention and which are specifically related to an embodiment of said invention, presented as an illustrative and non-limiting example thereof, is very briefly described below.
Figures 1-3 show block diagrams reflecting authentication systems for authenticating subscribers before entities offering services, according to the state of the art.
Figures 4 and 5 show block diagrams reflecting a system according to an embodiment of the invention.
Figure 6 schematically shows a possible format of an authentication request to an authentication node of the telecommunications network, and of the response to the authentication request, according to an embodiment of the invention.

### DESCRIPTION OF AN EMBODIMENT OF THE INVENTION

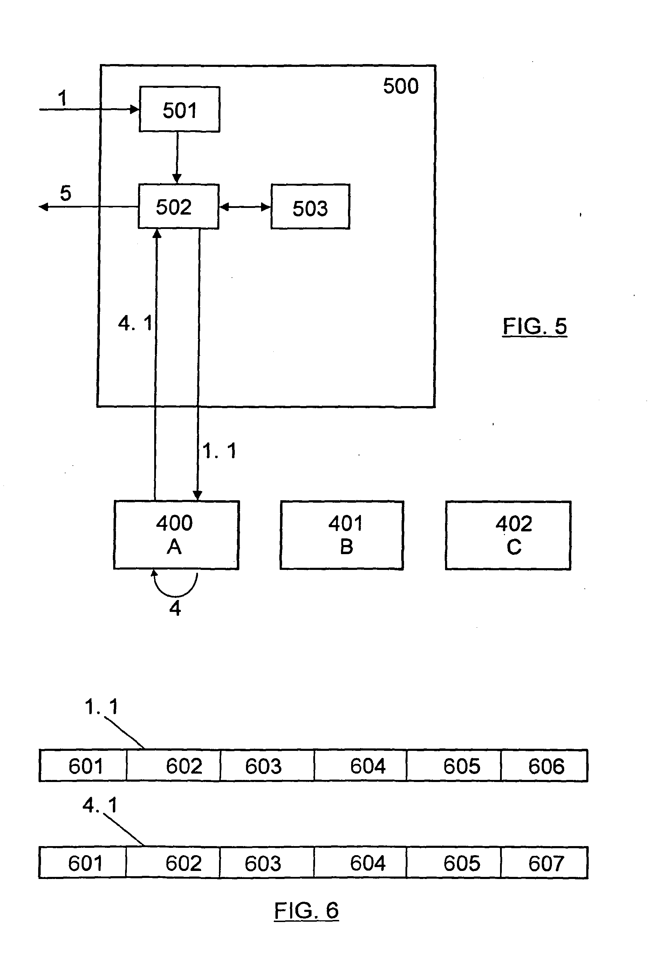

According to an embodiment of the invention, schematically shown in Figures 4 and 5, the invention is implemented in a telecommunications network including a plurality of authentication nodes (400, 401, 402) for authenticating a subscriber 100 before the network. The authentication nodes can be standard, of the type configured to carry out an authentication process 4 for authenticating the identity of the subscriber 100 from electronic credentials furnished by the subscriber, and to generate a positive or negative response 4.1 according to a result of said authentication process. According to this embodiment of the invention, each authentication node is configured to carry out authentication processes with (at least) one security level: for example, the authentication node 400 can be configured to authenticate the subscriber with a first security level A requiring credentials based on something which only the subscriber himself can (or should) know (for example, a password), the authentication node 401 can be configured to authenticate the subscriber with a second security level B (higher than the first security level) requiring credentials based on something which only the subscriber can (or should) have (for example, a special card calculating the random numbers or digital keys connected to the PC), and another authentication node 402 can be configured to authenticate the subscriber with a third security level C (higher than A and B) and which requires credentials based on something which only the correct subscriber can "be" (for example, the holder of his finger prints or voice).

The system of asserting identities comprises an identity assertion node 500 in turn comprising:
means 501 of receiving authentication requests 1 for authenticating subscribers 100 from entities 200 requesting 1 authentication of subscribers 100 (for example, entities offering certain services and receiving service requests 0 from subscribers); and
authentication check means 502 for checking authentication as a response to an authentication request.

The authentication check means 502 are configured for
- determining, by means of consulting a database 503, if the subscriber 100 has already been authenticated on a previous occasion during the same communications session established by the subscriber, and
   a) if said authentication check means 502 determine, by means of said consultation, that the subscriber 100 has already been authenticated on a previous occasion during said session, sending a "positive" authentication response 5 to the entity 200 which requested the authentication of the subscriber, and
   b) if said authentication check means 502 determine, by means of said consultation, that the subscriber 100 has not been authenticated on a previous occasion during said session, directing an authentication request 1.1 to an authentication node (400, 401 or 402) of the telecommunications network.

The authentication check means 502 are configured to receive a response 4.1 to the authentication request from the authentication node, and to send an authentication response 5 to the entity 200 which requested the authentication of the subscriber, according to said response 4.1 to the authentication request (the entity can then send the response 6 to the service request 0 to the subscriber). The authentication node 400 can carry out the authentication by first sending a credentials request 2 directly to the subscriber, and once it receives the submission 3 of credentials of the subscriber, carrying out an authentication process 4 based on said credentials.

The database 503 includes a listing of open sessions, an indication of a subscriber 100 for each session and an indication of an authentication status of said subscriber 100 in said session; the indication of an authentication status includes an indication of at least one security level (A, B, C) corresponding to a security level with which an authentication process for authenticating the subscriber has been carried out during said session.

The authentication request includes an indication of a desired security level (A, B or C), and the identity assertion node 500 is configured such that the check means 502 direct (if needed) an authentication request 1.1 to an authentication node 400 selected from among the plurality of authentication nodes (400, 401, 402) according to the desired security level.

Specifically, when the identity assertion node 500 receives the authentication request, the means 502 determine, by means of consulting the database 503, if the subscriber 100 has already been authenticated with said desired security level, and
- if they determine that the subscriber 100 has already been authenticated with said desired security level (or with a higher security level) on a previous occasion during the same session, they send an authentication response 5 to the entity 200 which requested the authentication of the subscriber, but
- if they determine that the subscriber 100 has not been authenticated with said security level (or with a higher security level) on a previous occasion during the same session, they direct an authentication request to an authentication node of the telecommunications network with the capability to carry out an authentication with said desired security level.

For example, it is possible that during a session, the subscriber 100 is at first authenticated with a first security level A (for example, with a simple password) to access a service requiring "low security" (perhaps a consultation of a general nature); this authentication is carried out through an authentication node 400 supporting said first security level, and the database 503 records that an authentication of the subscriber has been carried out with this first security level.

Then, during the same session, it is possible for the subscriber to wish to access a service requiring a higher security level B (for example, carrying out an economic transaction) and for which digital keys which the subscriber has in a special card are required (possibly in combination with the password). The entity managing the service sends the authentication request 1 to the identity assertion node 500, which checks in the database that in the session in progress, the subscriber has only been authenticated with the first security level A. Then, the identity assertion node sends an authentication request 1.1 to an authentication node 401 supporting the second security level B.

As described above, HTTP (HyperText Transfer Protocol) can be used for communication between the identity assertion node 500 and the authentication nodes 400/401/402, taking advantage of the fact that HTTP allows for including (with GET or POST) in a request a series of parameters directed to the server. In a possible embodiment of the invention, this mechanism is used for communication between the identity assertion node and the authentication nodes, such that when the identity assertion node receives an authentication request 1 for authenticating a subscriber 100 from an entity 200, it redirects it to the authentication node 400/401/402 with an HTTP response 302 and inserts a series of parameters in GET or POST mode to make communication possible. The authentication node receives the message 1.1, captures the parameters and once authentication 4 has concluded, returns 4.1 it to the identity assertion node 500 with its response written in the parameters.

The flow can be as follows:
I. An entity 200 offering a service needs to authenticate a subscriber 100, following Liberty Alliance® protocols, for example. Therefore, it directs an authentication request 1.1 to the identity assertion node 500, specifying the desired type of authentication (including security level requirements).
II. The identity assertion node 500 redirects 1.1 the authentication request message to the authentication node 400/401/402, adding the necessary parameters (see below).
III. The message 1.1 reaches the authentication node 400/401/402, which in turn carries out an authentication with the required security level in a standard manner.
IV. When a result (positive or negative) of the authentication process has been received, the authentication node redirects the message 4.1 back to the identity assertion node 500, accordingly updating the parameters.
V. Depending on the success of the authentication, the identity assertion node 500 responds 5 to the entity 200 with the suitable identity credentials or with a suitable error message.

Steps I and V can be standard, for example, identical to those of standard systems based on Identity Providers (such as Liberty Alliance®).

Figure 6 shows a possible content of an authentication request (1.1) and of a response message (4.1) of the authentication node, respectively. Specifically, the request and message include the following elements/fields:
601: an identification of the subscriber 100 (for example, his "MSISDN")
602: an identification of a security level (A, B, C) ("AuthnContext")
603: an identification of the entity 200 which requested the authentication ("ProviderID")
604: a security code ("SecToken") validating the identity assertion node 500 before the authentication node 400/401/402, and vice versa. This code can correspond to a digital signature or another code which enables ensuring the identity of one node before the other node in order to reduce the risk of frauds.
605: a value univocally identifying each authentication transaction in particular ("TransID")
606/607: the authentication status ("Status"): REQ, OK, NOK or error code (see below); REQ will be used (606) in the authentication requests 1.1, and OK/NOK or error code (607) in the responses 4.1.

By way of example, field 606/607 can, therefore, have the following values:
606:
   - "REQ":: Code by means of which the identity assertion node requests an authentication from the authentication node
607:
   - "OK":: Positive result of the authentication process 4
   - "NOK":: Negative result of the authentication process 4 (for example, due to the fact that the subscriber entered an incorrect password - "PIN cod")
   - "101": A parameter is missing
   - "102": Duplicate parameter
   - "103": Unknown parameter
   - "104": Unknown authentication context (i.e., the authentication node cannot carry out the authentication with the required security level)
   - "105": Incorrect MSISDN
   - "106": Invalid security code
   - "110": Error upon connecting to some external entity, for example to a PKI (Public Key Infrastructure) infrastructure
   - "120": Internal error
   - "130": Maximum wait time surpassed
   - "150": Unknown error

Throughout the present description and claims, the word "comprise" and variations thereof, such as "comprising", do not intend to exclude other steps or components.

## Claims

1. A system of asserting identities in a telecommunications network, the telecommunications network including at least one authentication node (400, 401, 402) for authenticating a subscriber (100) before the network, said at least one authentication node (400, 401, 402) being configured to carry out an authentication process (4) for authenticating the identity of the subscriber (100) from electronic credentials furnished by the subscriber, and to generate a positive or negative response (4.1) according to a result of said authentication process (4);
the system of asserting identities comprising
an identity assertion node (500) comprising:
means (501) of receiving authentication requests (1) for authenticating subscribers (100) from entities (200) requesting authentication of subscribers (100);
authentication check means (502) for checking authentication as a response to an authentication request;
**characterized in that**
said authentication check means (502) are configured for
- determining, by means of consulting a database (503), if the subscriber (100) has already been authenticated on a previous occasion during the same communications session established by the subscriber, and
a) if said authentication check means (502) determine, by means of said consultation, that the subscriber (100) has already been authenticated on a previous occasion during said session, sending an authentication response (5) to the entity (200) which requested the authentication of the subscriber, and
b) if said authentication check means (502) determine, by means of said consultation, that the subscriber (100) has not been authenticated on a previous occasion during said session, directing an authentication request (1.1) to an authentication node (400) of the telecommunications network;
the authentication check means (502) being configured to receive a response (4.1) to the authentication request (1.1) from the authentication node (400), and to send an authentication response (5) to the entity (200) which requested the authentication of the subscriber, according to said response (4.1) to the authentication request.

2. A system according to claim 1, **characterized in that** the database includes a listing of open sessions, an indication of a subscriber (100) for each session and an indication of an authentication status of said subscriber (100) in said session.

3. A system according to claim 2, **characterized in that** the indication of an authentication status includes an indication of at least one security level (A, B, C) corresponding to a security level with which an authentication process for authenticating the subscriber has been carried out during said session.

4. A system according to any of the previous claims, **characterized in that** the telecommunications network includes a plurality of authentication nodes (400, 401, 402), each authentication node being configured to carry out authentication processes with at least one security level (A, B, C), at least one authentication node (400) being configured to carry out authentication processes with a security level (A) that is different from the security level (B/C) of the authentication process (B/C) of another authentication node (401/402), the authentication request (1) including an indication of a desired security level (A), the identity assertion node (500) being configured such that the authentication check means (502) direct an authentication request (1.1) to an authentication node (400) selected from among the plurality of authentication nodes (400, 401, 402) according to the desired security level (A).

5. A system according to any of the previous claims, **characterized in that** there are several security levels, **in that** the authentication requests (1) include an indication of a desired security level (A), and **in that** the authentication check means (502), for checking authentication as a response to an authentication requests, are configured for
- determining, by means of consulting a database (503), if the subscriber (100) has already been authenticated with said security level (A) on a previous occasion during the same session, and
a) if said authentication check means (502) determine, by means of said consultation, that the subscriber (100) has already been authenticated with said security level (A) on a previous occasion during the same session, sending an authentication response (5) to the entity (200) which requested the authentication of the subscriber, and
b) if said authentication check means (502) determine, by means of said consultation, that the subscriber (100) has not been authenticated with said security level (A) on a previous occasion during the same session, directing an authentication request (1.1) to an authentication node (400) of the telecommunications network with the capability to carry out an authentication with said security level (A).

6. A system according to any of the previous claims, **characterized in that** the authentication request (1.1) includes at least one identification (601) of the subscriber (100) and one identification (602) of a security level (A, B, C).

7. A system according to any of the previous claims, **characterized in that** the response (4.1) to the authentication request includes at least one identification (601) of the subscriber (100), one identification (602) of a security level (A, B, C) and one indication (607) of a result of the authentication (4) in the authentication node.

8. A system according to any of the previous claims, **characterized in that** the identification (601) of the subscriber comprises the MSISDN of the subscriber.

9. A system according to any of the previous claims, **characterized in that** the authentication request (1.1) is sent from the identity assertion node (500) to the authentication node (400) under the HyperText Transfer Protocol (HTTP).

10. A system according to any of the previous claims, **characterized in that** the authentication request (1.1) is sent from the identity assertion node (500) to the authentication node (400) through the telecommunications network.

11. A system according to any of the previous claims, **characterized in that** the authentication response (5) comprises credentials accrediting the subscriber (100) before the entity (200).

12. A system according to any of the previous claims, **characterized in that** the authentication node (400) is configured to, as a response to an authentication request (1.1), send a credentials request (2) to the subscriber (100) to receive a submission (3) of credentials of the subscriber (100).

13. A method of asserting identities in a telecommunications network, the telecommunications network including at least one authentication node (400, 401, 402) for authenticating a subscriber (100) before the network, said at least one authentication node (400, 401, 402) being configured to carry out an authentication process (4) for authenticating the identity of the subscriber (100) from electronic credentials furnished by the subscriber, and to generate a positive or negative response (4.1) according to a result of said authentication process (4);
the method comprising the steps of:
receiving, in an identity assertion node (500), an authentication request (1) for authenticating a subscriber (100) from an entity (200) requesting authentication of the subscriber (100);
- determining, by means of consulting a database (503), if the subscriber (100) has already been authenticated on a previous occasion during the same communications session established by the subscriber, and
a) if it is determined, by means of said consultation, that the subscriber (100) has already been authenticated on a previous occasion during said session, sending an authentication response (5) to the entity (200) which requested the authentication of the subscriber, and
b) if it is determined, by means of said consultation, that the subscriber (100) has not been authenticated on a previous occasion during said session, directing an authentication request (1.1) to an authentication node (400) of the telecommunications network;
receiving a response (4.1) to the authentication request from the authentication node (400), and
sending an authentication response (5) to the entity (200) which requested the authentication of the subscriber, according to said response (4.1) to the authentication request.

14. A method according to claim 13, **characterized in that** a listing of open sessions, an indication of a subscriber (100) for each session and an indication of an authentication status of said subscriber (100) in said session are established in the database.

15. A method according to claim 14, **characterized in that** an indication of at least one security level (A, B, C) corresponding to a security level with which an authentication process for authenticating the subscriber has been carried out during said session, is included in the indication of an authentication status.

16. A method according to any of claims 13-15, **characterized in that**, the telecommunications network including a plurality of authentication nodes (400, 401, 402), each authentication node configured to carry out authentication processes with at least one security level (A, B, C), at least one authentication node (400) being configured to carry out authentication processes with a security level (A) that is different from the security level (B/C) of the authentication process (B/C) of another authentication node (401/402),
an indication of a desired security level (A) is included in the authentication request (1), and the identity assertion node (500) directs the authentication request (1.1) to an authentication node (400) which the assertion node selects from among the plurality of authentication nodes (400, 401, 402), according to the desired security level (A).

17. A method according to any of claims 13-16, **characterized in that** there are several security levels, **in that** an indication of a desired security level (A) is included in the authentication requests, and the following steps are carried out in the identity assertion node:
- determining, by means of consulting a database (503), if the subscriber (100) has already been authenticated with said desired security level (A) on a previous occasion during the same session, and
a) if it is determined, by means of said consultation, that the subscriber (100) has already been authenticated with said security level (A) on a previous occasion during the same session, sending an authentication response (5) to the entity (200) which requested the authentication of the subscriber, and
b) if it is determined, by means of said consultation, that the subscriber (100) has not been authenticated with said security level (A) on a previous occasion during the same session, directing an authentication request (1.1) to an authentication node (400) of the telecommunications network with the capability to carry out an authentication with said security level (A).

18. A method according to any of claims 13-17, **characterized in that** at least one identification (601) of the subscriber (100) and one identification (602) of a security level (A, B, C) are included in the authentication request (1.1).

19. A method according to any of claims 13-18, **characterized in that** at least one identification (601) of the subscriber (100), one identification (602) of a security level (A, B, C) and one indication (607) of a result of the authentication (4) in the authentication node are included in the response (4.1) to the authentication request.

20. A method according to any of claims 13-19, **characterized in that** the MSISDN of the subscriber is used for the identification (601) of the subscriber.

21. A method according to any of claims 13-20, **characterized in that** the authentication request (1.1) is sent from the identity assertion node (500) to the authentication node (400) under the HyperText Transfer Protocol (HTTP).

22. A method according to any of claims 13-21, **characterized in that** the authentication request (1.1) is sent from the identity assertion node (500) to the authentication node (400) through the telecommunications network.

23. A method according to any of claims 13-22, **characterized in that** credentials accrediting the subscriber (100) before the entity (200) are included in the authentication response (5).

24. A method according to any of claims 13-23, **characterized in that** a credentials request (2) is sent, as a response to an authentication request (1.1), to the subscriber (100) from the authentication node (400) to receive a submission (3) of credentials of the subscriber (100).
